# EUROPEAN PATENT SPECIFICATION

(11) **EP 1 469 692 B1**
(45) Date of publication and mention of the grant of the patent: **16.01.2008**
(21) Application number: 04008911.2
(22) Date of filing: 14.04.2004
(51) Int. Cl.: H04Q 7/32

(54) **A mobile terminal, management method of information in the same, and a computer program for the information management**
Mobiles Endgerät, Verwaltungsverfahren für seine Daten und Rechnerprogramm zur Datenverwaltung
Terminal mobile, procédé de gestion des données là-dedans, et programme d'ordinateur pour cette gestion de données

(30) Priority: 16.04.2003 JP 2003112110
(43) Date of publication of application: 20.10.2004
(73) Proprietor: NEC CORPORATION, Tokyo (JP)
(72) Inventor: Tsukamoto, Tadashi, Minato-ku, Tokyo (JP)
(74) Representative: Betten & Resch

(56) References cited:
- EP-A- 1 107 623
- DE-A1- 19 511 031
- GB-A- 2 327 570
- GB-A- 2 373 679
- US-B1- 6 195 568

## Description

### FIELD OF THE INVENTION

The present invention relates to a technique enabling the secure information management for a mobile terminal such as a mobile phone, particularly to a technique enabling the identification of an authorized user of a mobile terminal on the basis of identification information stored in a memory medium.

### BACKGROUND OF THE INVENTION

Recently, new mobile phones (so-called third generation mobile phones) based on a next generation standard such as IMT-2000 have been developed. Such a third generation (3G) mobile phone includes, as separate elements, a mobile phone body and a memory medium (IC card) which stores information about a subscriber.

For receiving a service via such a 3G mobile phone, individual users possess their respective UIM cards (user identity module cards, or they may be also called USIM or R-UIM cards). The UIM card is an IC card which stores information about a subscriber or an owner of the card (including information about a service provider), and other information (e.g., ID information necessary for credit-based transaction). It is possible for a user to receive a service via any given 3G mobile phone by inserting his/her own UIM card into the body of the mobile phone.

With regard to a conventional GSM-based mobile phone, a SIM (subscriber identity module) card only contains information about one subscriber. In contrast, with regard to a 3G mobile phone, plural users can use the same phone by connecting their respective UIM cards to that mobile phone. Because a 3G mobile phone permits such mode of usage, it is desirable for a UIM card to contain not only information of a subscriber (and service provider), but also his/her personal data (personal contents), in order to ensure privacy of the personal data of the subscriber. The personal contents used herein refer to data fed by a user, such as a list of phone numbers utilized by the user, log record of e-mails received and dispatched, his/her own personal schedules, and customized settings of the mobile phone.

However, since the UIM card is limited in its storage capacity, it is impossible for a UIM card to store all the personal contents (which may be also called "user data" hereinafter). Thus, actually, the majority of various personal contents fed, customized and utilized by a user (e.g., log record of e-mails, list of phone numbers, customized setting of applications, etc.) are stored in an internal memory of the mobile phone body, and the data are kept stored there even when the mobile phone is not actually used by the user.

That is, a 3G mobile phone having a constitution as above and owned by a certain user. If another user (extension user) different from the owner user connects (attaches) his UIM card to the mobile phone, the extension user will be able to receive a service via the mobile phone on the basis of his/her own subscription data. At the same time, the extension user can gain access to the personal contents fed by the owner user and stored in an internal memory of the mobile phone, and freely utilize or change them if he wants.

Specifically, if a 3G mobile phone is shared by a number of users, following problems may arise:
(1) A current user can gain access to the log records of telephone numbers and mails received and dispatched by previous users;
(2) A current user can gain access to mails addressed to previous users;
(3) A current user can utilize contents (e.g., applications) downloaded via networks by previous users; and
(4) A current user can gain access to personal contents fed and customized by previous users, and can modify them by adding new contents or by deleting existing contents, if he/she wants.

With regard to a conventional 3G mobile phone, a user, even when he switches it on, cannot receive a service via the mobile phone unless he connects his UIM card to the mobile phone. However, even in that situation, he can freely gain access to the personal contents fed by previous users into an internal memory of the mobile phone; and utilize them if he wants.

Generally, with regard to the first and second generation mobile phones available in the Japanese market, each mobile phone stores information about a subscriber and subscription condition in a non-volatile area of its internal memory. Therefore, with regard to such a mobile phone, only its owner or subscriber can gain access to data stored in its memory: management of subscription data (including subscriber information) and management of personal contents are executed by only one user. In contrast, with regard to a 3G mobile phone, since the mobile phone is highly likely to be shared by plural users as described above, it is necessary to comprise a function for protecting the privacy of personal contents stored in an internal memory of the mobile phone.

As a technique known in the prior art, "A mobile terminal, and method for protecting the privacy of user data stored in its memory" (for example, see Japanese Patent Laid-Open No. 2001-101079) can be mentioned. This technique concerns with the protection, in a mobile terminal which stores user data in a non-volatile area of its internal memory, of the user data against deletion or wrong registration during their registration.

As another technique known in the prior art, "A method for encrypting/decrypting information, and system therefor," (see, for example, Japanese Patent Laid-Open No. 2002-281022). This technique makes it possible to automatically encrypting/decrypting user ID information or information introduced by a user for his ID, using a keyword.

As a third technique known in the prior art, there is "A mobile phone based on the use of a subscriber's card" (see, for example, Japanese Patent Laid-Open No. 2002-300254). According to this technique, if a mobile phone working on a SIM card and contains, in its internal memory, personal data of the owner user (e.g., a list of phone numbers fed by the user, log record of e-mails received and dispatched by the user, his/her own personal schedules, and customized setting of the mobile phone) is transferred to another user, the latter user is prevented from gaining access to the personal data.

The invention disclosed in Japanese Patent Laid-Open No. 2001-101079 is directed towards mobile phones distinct from 3G mobile phones which require the use of a UIM card.

According to the invention disclosed in Japanese Patent Laid-Open No. 2002-281022, the keyword used for encrypting user ID information is fed by the user himself, and is not based on information stored in his UIM card, and thus this system does not fit to 3G mobile phones.

The invention disclosed in Japanese Patent Laid-Open No. 2002-300254 is applicable to 3G mobile phones. Indeed, the personal data stored in an internal memory of a mobile phone are deleted, as soon as an SIM card is removed from the body of the mobile phone. However, the personal data are transferred, in an encrypted form, into an external memory different from the SIM card to be stored there, when the SIM card is removed from the body of the mobile phone. Namely, according to this invention, for the protection of the privacy of personal data, a mobile phone requires another external memory in addition to a SIM card.

Another solution to this problem is proposed in the European patent application EP 1107623.

Reviewing the problems encountered with the techniques known in the prior art, obviously there is need for a mobile terminal including a 3G mobile phone capable of securely protecting the privacy of personal data, which does not require any additional card such as a memory card other than a UIM card, and in which a current user can not gain access to personal data of previous users stored in an internal memory of the terminal, even when the terminal is switched on with no UIM card being connected thereto.

### SUMMARY OF THE INVENTION

The present invention, being proposed with a view to solve the problems encountered in the prior art as described above, aims to provide a mobile terminal which can be shared by plural users (sharing users) in which the individual users can be identified on the basis of ID information stored in their respective external memory media which can be freely attached to or detached from the mobile terminal, and in which the improved protection of the privacy of personal contents of any given sharing user stored in an internal memory of the mobile terminal is ensured, and a method therefor.

The present invention provides a mobile terminal (mobile phone 100) capable of identifying an authorized user, when a user connects a detachable memory medium (IC card or UIM card 8) to the mobile terminal, based on ID information (IMSI or international mobile subscriber identifier, information of a subscriber, information of a service provider, etc.) stored in the memory medium, the mobile terminal comprises:
memory area creating means (3) for creating a memory area unique to each authorized user (IMSI specific folder) associated with the ID information of the user;
encrypting means (3, 13) for reading out ID information from a memory medium connected to the mobile terminal, and encrypting personal contents fed to the mobile terminal on the basis of the ID information;
storing means (3) for storing the encrypted personal contents in a specific memory area associated with the ID information; and
decrypting means (3, 13) for reading out ID information from the memory medium connected to the mobile terminal, and decrypting, based on the ID information, the personal contents encrypted and stored in the specific memory area associated with the ID information, thereby rendering the personal contents accessible to the user.

Preferably, the memory area creating means may automatically create, in response to a memory medium being connected to the mobile terminal, a specific,memory area in association with ID information stored in the memory medium.

In a mobile terminal shared by a plurality of authorized users, a preferred embodiment may further comprise an information sharing means which allows the users at least either to write contents into a common memory area (shared folder) or to gain access to contents stored in the common memory area.

The encrypting means (cryptography software program 13) may generate a cryptographic key based on ID information read out from the memory medium connected to the mobile terminal, and encrypts personal contents using the cryptographic key.

The decrypting means (cryptography software program 13) may generate a cryptographic key on the basis of ID information read out from the memory medium connected to the mobile terminal, and decrypts the encrypted personal contents stored in the specific memory area associated with the ID information by using the cryptographic key.

Incidentally, the above-described objects may be achieved by an information management method applicable to a mobile terminal having an aforementioned constitution.

The above-described objects may be achieved by allowing the method to be achieved in a mobile terminal having an aforementioned constitution which is, in turn, achieved by executing program codes by way of a computer, or by running a computer with such program codes by way of a memory medium legible to the computer.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The above and other objects, features and advantages of the present invention will become more apparent from the following detailed description when taken in conjunction with the accompanying drawings wherein:
FIG. 1 is a diagram outlining how user data are managed in a mobile phone 100 according to an embodiment of the invention;
FIG. 2 is a block diagram for illustrating a common constitution of a mobile phone to which the invention can be applied;
FIG. 3A is a diagram outlining the static management of data in an information processing system;
FIG. 3B is a diagram outlining the dynamic management of data in an information processing system;
FIG. 4 is a diagram outlining how user data decrypted and user data encrypted coexist in a mobile phone 100 embodying the invention, both decryption and encryption of data being achieved by the user data management method of the invention;
FIG. 5 is a flowchart showing control steps executed in a mobile phone 100 embodying the invention subsequent to the power-on of the phone;
FIG. 6 is a flowchart showing control steps executed in a mobile phone 100 embodying the invention for reading out user data; and
FIG. 7 is a flowchart showing control steps executed in a mobile phone 100 embodying the invention for storing user data.

### DETAILED DESCRIPTION OF THE PREFERRED EMBODIMENTS

Preferred embodiments of the present invention will now be described in detail in accordance with the accompanying drawings.

The present invention relates to a mobile terminal which includes, as its representative, a mobile phone.

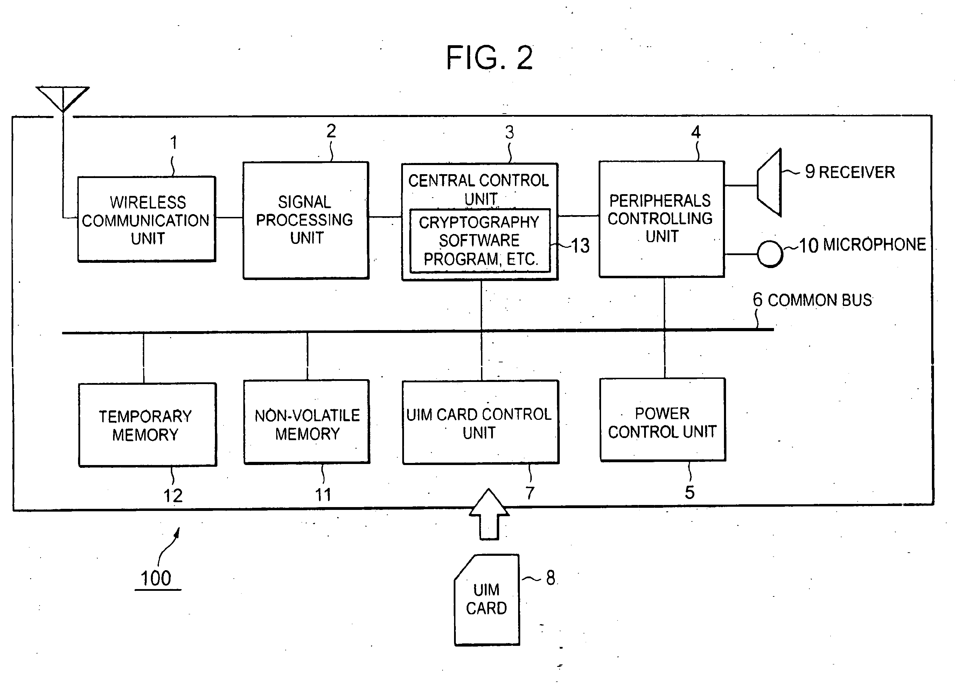

FIG. 2 is a block diagram for illustrating a common constitution of a mobile phone to which the invention can be applied.

The mobile phone 100 shown in the figure is a 3G mobile phone on the basis of a common standard such as IMT-2000, which a UIM card 8 can be freely attached to or detached from.

The UIM (user identity module) card 8 is a memory medium on the basis of a so-called IC card. The UIM card stores, in advance, the ID information of a user who is authorized to use the mobile phone 100. In this embodiment, the ID information is the information of a subscriber (information of a service provider) called IMSI (international mobile subscriber identifier). IMSI is information assigned to each subscriber (user) to uniquely identify the subscriber.

In FIG. 2, a wireless unit 1 transmits/receives radio waves having a specific frequency band to/from a base station for wireless communication. A signal-processing unit 2 converts signals on radio waves received by the wireless unit 1 into digital signals which are legible to a central,control unit 3. In addition, the signal-processing unit 2 modulates digital signals delivered by the central control unit 3 such that the resulting signals can be transmitted by the wireless unit 1.

The central control unit 3 includes hardware consisting of a CPU (central processing unit) which governs the overall operation of the mobile phone 100 and a memory (both of which are not shown), and software consisting of various programs to be executed by the CPU. In this embodiment, the mobile phone 100 includes, as one of executable software programs, a cryptography software program 13 (which will be detailed later).

A peripherals controlling unit 4 controls, under the instruction from the central control unit 3, auditory output to a receiver (speaker) 9, voice input from a microphone 10. Also, the peripherals controlling unit 4 controls, under the instruction from the central control unit 3, functions of operation switches and a display (not shown).

A UIM card control unit 7 reads, under the instruction of the central control unit 3, information from a UIM card 8 connected to the mobile phone 100, and writes the information into a memory of the mobile phone when needed. A power control unit 5 contains a battery not shown, and supplies power to every part of the mobile phone 100.

A non-volatile memory 11 (or volatile memory in which stored data are backed up ceaselessly) is a memory unit such as EEPROM for storing user data (personal contents), and various software programs to be executed by CPU in the central control unit 3.

In this embodiment, the user data (personal contents) of a user refer to a list of phone numbers, mails received and dispatched, log record of telephone calls made and received, and other such data, and instructions for customized setting of the operation of the mobile phone (for example, instructions for customized arrangement of icons on the display of the mobile phone).

A temporary memory unit 12 temporarily stores data read from a UIM card 8, and data to be written into the UIM card, and also serves as a work area when the central control unit 3 executes a program.

A common bus 6 is connected to every unit constituting the mobile phone 100 and is responsible for delivering various necessary data in accordance with the current operation of the mobile phone.

When a user wants to use the mobile phone 100, he attaches a UIM card 8 to a specified site such as a slot (not shown) on the body of the mobile phone 100. By so doing, the user is ready to receive various services (including access to Web sites) for which he subscribes, such as communication with a desired person via a cellular network.

Incidentally, the constitution of the mobile phone 100 described above (particularly the one described in connection with wireless communication in FIG. 2) is mentioned as an illustrative example. Since various new technologies are currently available for the construction of the systems responsible for wireless communication, further description of the role of individual units in this embodiment will be omitted.

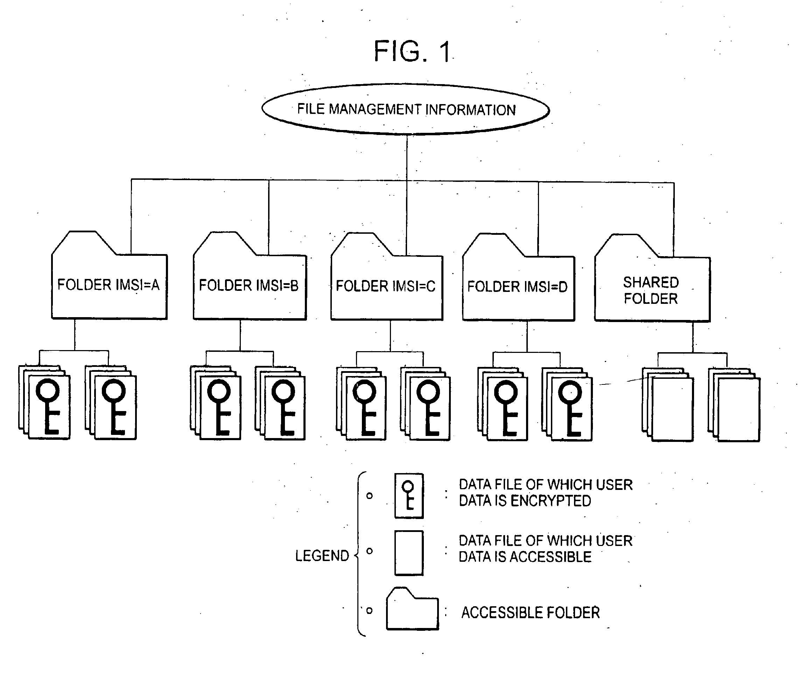

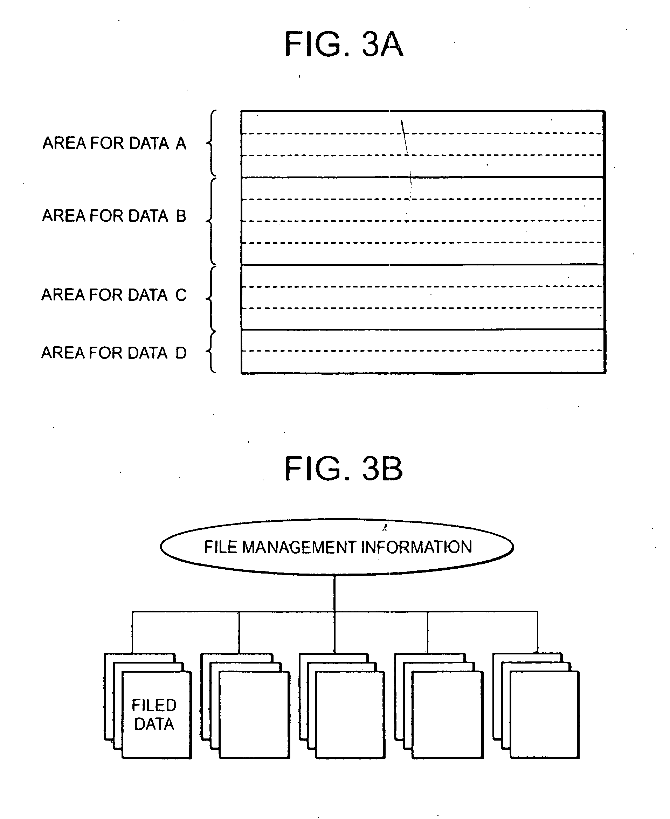

The method of the embodiment for managing user data (personal contents) will be described with reference to FIGS. 1 and 3A and 3B.

FIG. 3A is a diagram outlining the static management of data in an information processing system, and FIG. 3B a diagram outlining the dynamic management of data in an information processing system.

For managing data to be processed in an information processing system, various methods have been proposed. Of those methods, according to the one on the basis of static arrangement of data shown in FIG. 3A, individual data clusters (data clusters A to D) are distributed to different areas which are provided in advance and have a definite capacity, to be stored there. According to the second one on the basis of dynamic arrangement of data shown in FIG. 3B, individual data clusters are stored as data files each having a varied size in accordance with file management information (file management table). The file management information is stored in a specified area of a non-volatile memory of the information processing system, and, for a given data cluster, its mapping with respect to a physical address in that specified area is registered.

In either data management, individual data clusters (data files) are stored in a non-volatile memory. The individual data clusters thus stored are fetched from the non-volatile memory to be delivered to a temporary memory for ready access in response, for example, to the power-on of the information processing system or to a read-out request from the user. When the user wants to change certain data, he accesses to a relevant data cluster stored in the temporary memory to change the data, and then the change is transferred to the corresponding data cluster stored in the non-volatile memory. The timing at which data stored in the non-volatile memory are changed in accordance with the change of the corresponding data in the temporary memory unit varies according to the property of the data.

In order to protect the privacy of individual user data, this embodiment basically depends on dynamic data management (see FIG. 3B).

FIG. 1 is a diagram outlining how user data are managed in a mobile phone 100 according to an embodiment of the invention.

This embodiment presupposes that user data stored in a mobile phone 100 are managed dynamically. An area within a non-volatile memory 11 provided for storing user data stores folders (data representing folders). The folders are associated IMSIs of individual users. These folders (to be referred to as "IMSI specific folders" hereinafter) are stored, on a one-to-one basis, in connection with (in association with) their corresponding IMSIs (subscriber identification data) which have been given to uniquely identify authorized users of the mobile phone 100. The user data of a user is stored in an "IMSI specific folder" provided in connection with an IMSI recorded on a UIM card 8 used by the user.

According to the invention, the mobile phone 100 prepares, in the non-volatile memory 11, "IMSI specific folders" (folders labeled as "IMSI = A...D" in FIG. 1) whose number is equal to the number of UIM cards 8 which are rightly connected to the mobile phone 100 (in other words, the number of users authorized to share the mobile phone 100).

The area provided in the non-volatile memory 11 for storing user data also includes a "shared folder" for storing contents which can be shared by the users who are authorized to use the mobile phone 100.

The "shared folder" as well as the "IMSI specific folders" are managed in accordance with the file management information (file management table) described above with reference to FIG. 3B. The management of user data according to this embodiment proceeds as outlined in FIG. 1 such that user data are stored in an "IMSI specific folder," that is, a "specific folder labeled as IMSI = A...D" after the data have been encrypted using a key generated on the basis of an IMSI read out from a UIM card 8 currently connected to the mobile phone. When an "IMSI specific folder" is instituted, it is uniquely connected with the corresponding IMSI.

The file for storing encrypted personal contents is a data file having a variable size. The central control unit 3 dynamically manages the connection of "IMSI specific folders" which occupy a specified memory area, with IMSIs or ID information of the sharing users with the aid of the file management information.

In this embodiment, key information (cryptographic key) is generated on the basis of an IMSI read from a UIM card 8. To put it more specifically, key information used for encrypting and decrypting user data is generated on the basis of an IMSI read from a UIM card 8. The key information may be generated based on part of the IMSI or on its entirety. Generation of cryptography key information on the basis of part of an IMSI or on its entirety may be achieved by means of encryption procedures or hash treatment.

In the dynamic management of user data performed by the central control unit 3, the cryptography software program 13 is responsible for the encryption and decryption (deciphering) of user data (personal contents).

More specifically, the cryptography software program 13 is responsible not only for generating a cryptography key (key information) on the basis of ID information (IMSI) read out from a UIM card 8 (memory medium), but also for encrypting personal contents connected to the IMSI using the cryptography key. The cryptography software program 13 is also responsible not only for generating a cryptography key on the basis of an IMSI read out from a UIM card 8, but also for decrypting personal contents currently stored in an "IMSI specific folder" in connection with the IMSI in an encrypted form, using the cryptography key.

The cryptography software program 13 causes an IMSI read out from a UIM card 8 to be stored temporarily, before it engages with the encryption or decryption of user data connected to the IMSI as described above.

The central control unit 3 of the mobile phone 100 executes a main program (not shown) necessary for the overall control of the operation of the mobile phone. As soon as the mobile phone 100 is powered on, the main program causes the cryptography software program 13 to be activated, regardless of whether a UIM card 8 is connected to the mobile phone 100 or not.

In addition, the main program causes the cryptography software program 13 to be activated when personal contents stored in a temporary memory 12 (user data not yet encrypted) are exchanged (updated) by a user for new data fed or downloaded by the user.

In either case, the cryptography software program 13 encrypts the updated data using the cryptographic key, stores the encrypted data in the temporary memory 12, and then transfers the data to a corresponding "IMSI specific folder." In this embodiment, the central control unit 3 arrests, via the main program, the cryptography software program 13, each time an encryption or decryption session is completed.

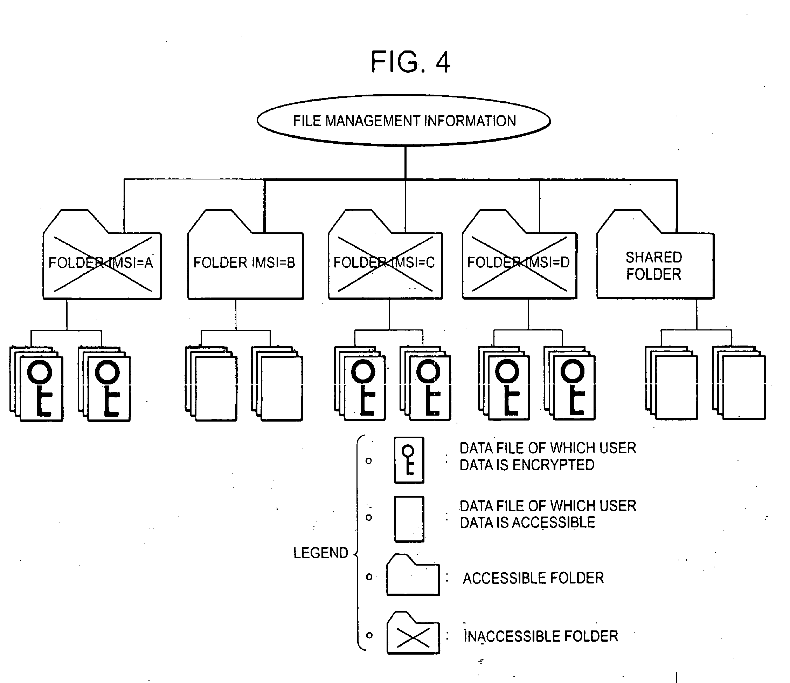

FIG. 4 is a diagram outlining how user data decrypted and user data encrypted coexist in a mobile phone 100 embodying the invention, both decryption and encryption of data being achieved by the user data management method of the invention.

In the figure, folders indicated as "IMSI = A...D" are "IMSI specific folders." The relationship of those folders to individual IMSIs (=A...D) is as follows.

A folder signified as IMSI=A contains data which are protected (encrypted/decrypted) by means of a cryptographic key generated on the basis of corresponding ID information, that is, IMSI="A."

A folder signified as IMSI=B contains data which are protected (encrypted/decrypted) by means of a cryptographic key generated on the basis of corresponding ID information, that is, IMSI="B."

A folder signified as IMSI=C contains data which are protected (encrypted/decrypted) by means of a cryptographic key generated on the basis of corresponding ID information, that is, IMSI="C."

A folder signified as IMSI=D contains data which are protected (encrypted/decrypted) by means of a cryptographic key generated on the basis of corresponding ID information, that is, IMSI="D."

FIG. 4 shows a case in which a user having a UIM card 8 which carries IMSI="B" as ID information (subscriber information) connects the card to the mobile phone 100. In this case, the user can gain access to personal contents stored in an "IMSI specific folder" labeled as IMSI=B after they are decrypted. The user can also gain access to contents stored in a "shared folder." On the other hand, the user cannot gain access to personal contents stored in "IMSI specific folders" other than the one labeled as IMSI=B, because they are protected via encryption from access by the user.

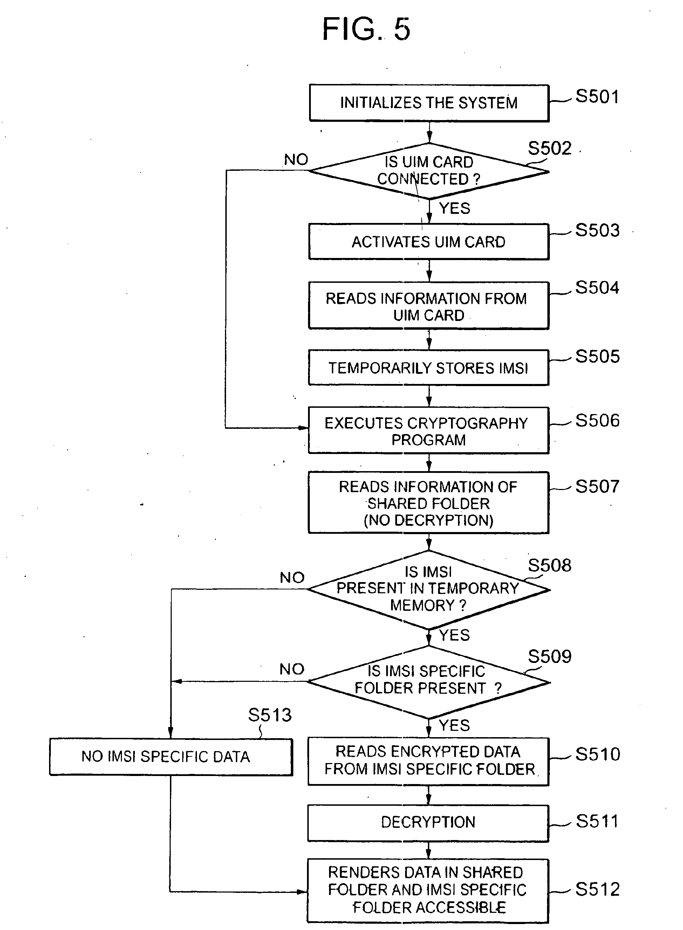

Next, control steps underlying the above-described operation of the mobile phone 100 will be described with reference to FIGS. 5 to 7.

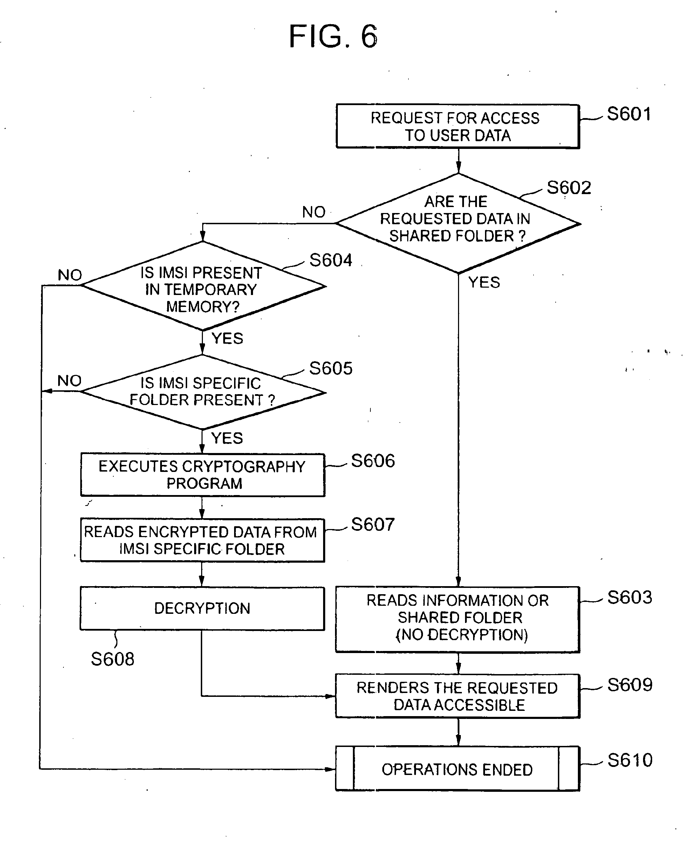

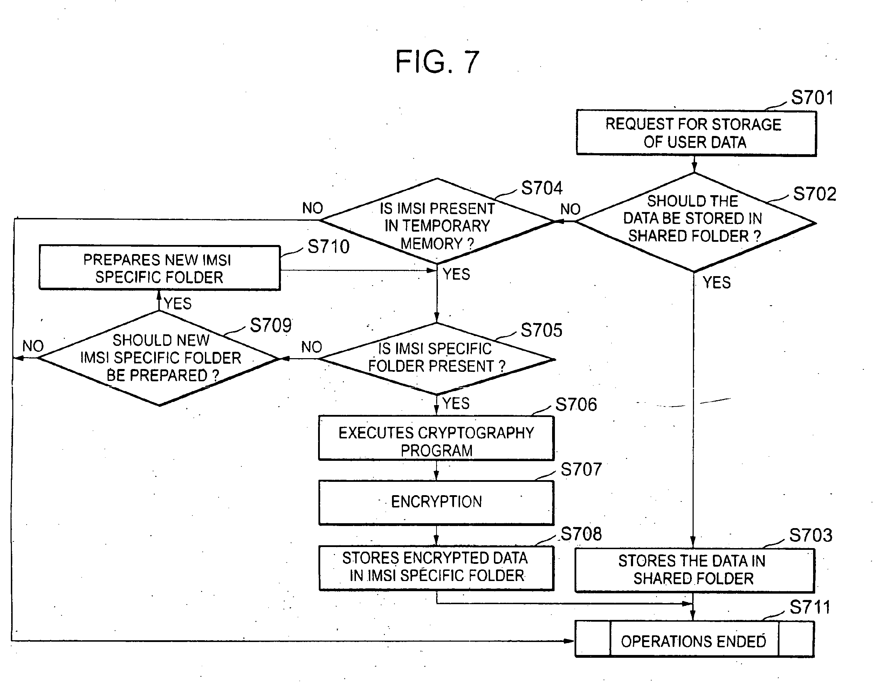

FIG. 5 is a flowchart showing control steps executed in a mobile phone 100 embodying the invention subsequent to the power-on of the phone. FIG. 6'is a flowchart showing control steps executed in a mobile phone 100 embodying the invention for reading user data. FIG. 7 is a flowchart showing control steps executed in a mobile phone 100 embodying the invention for storing user data.

The flowcharts shown in FIGS. 5 to 7 represent a sequence of steps which are executed by the CPU (not shown) in the central control unit 3 shown in FIG. 2 by way of a software program.

First, the operation of the mobile phone 100 subsequent to its power-on will be described with reference to FIG. 5. The sequential steps shown in the flowchart of' FIG. 5 start when a power control unit 5 causes power to be supplied to the central control unit 3 as soon as it detects that a power-on operation is executed according to a specified manner.

The central control unit 3 initializes the mobile phone 100 (step S501) and simultaneously checks whether a UIM card 8 is connected or not (step S502).

When the central control unit 3 finds the answer YES (a UIM card 8 is connected) at step S502, it activates the UIM card 8 connected (step S503), and simultaneously reads out necessary data from the card (step S504). The data read out at step S504 include an IMSI or ID information of a user. The central control unit 3 delivers the IMSI thus read out to a temporary memory 12 to be temporarily stored there (step S505), and proceeds to step S506.

At step S506, the central control unit 3 starts to execute a cryptography software program 13. Step S506 is also executed when the central control unit 3 finds the answer NO (no UIM card 8 is connected) at step S502.

Then, the central control unit 3 fetches data contained in a "shared folder" and delivers them to the temporary memory 12 to be temporarily stored there (step S507). During this operation, no encryption or decryption of data occurs, because the data contained in the "shared folder" are open to all users.

The central control unit 3 checks whether the IMSI temporarily stored in the temporary memory 12 at step S505 are really there or not (step S508). When the central control unit 3 finds the answer YES (the IMSI is really present in the temporary memory 12) at step S508, it checks whether a folder corresponding with the IMSI stored in the temporary memory 12 (that is, an "IMSI specific folder" associated with the IMSI) is present or not (step S509).

Next, when the central control unit 3 finds the answer YES at step S509 (the sought "IMSI specific folder" is present), it fetches encrypted data contained in that "IMSI specific folder" stored in a non-volatile memory 11, and delivers them to the temporary memory 21 (step S510).

The central control unit 3 generates a cryptographic key based on the IMSI temporarily stored, and decrypts user data read out at step S510 using the key (step S511). At step S512, the central control unit 3 arranges the user data decrypted at step S511 and contents (common data) of the "shared folder" read out at step S507 in the temporary memory 12 so as to render them readily accessible.

The central control unit 3 determines the answer NO at step S508 or S509, when it encounters following situations:
(1) The mobile phone is turned on although a UIM card 8 is not connected thereto; and
(2) An "IMSI specific folder" is not present that corresponds with an IMSI read out from a UIM card 8 connected to the mobile phone.

If the central control unit 3 encounters either of the above situations, it proceeds to step S512 so that it can arrange the common data read out at step S507 in the temporary memory 12 so as to render them readily accessible.

Next, the steps which are required to allow a user to read user data will be described with reference to FIG. 6.

When the central control unit 3 detects a request from a user for reading data (step S601), it checks whether the request is configured to designate the reading out of common data contained in the "shared folder" or not (step S602).

When the central control unit 3 finds the answer YES at step S602, it fetches common data in the "shared folder" (step S603) and delivers them to the temporary memory 12 to render them readily accessible (step S609). Since the common data is open to every user and is not encrypted, decryption of the data is not required.

On the contrary, if the central control unit 3 finds the answer NO (the request is not for common data) at step S602, it concludes that the request dispatched at step S601 is for user data specifically connected with the user. In this case, the central control unit 3 checks (step S604) whether or not there is a temporarily stored IMSI that should be present, if the central control unit 3 has properly performed necessary steps , particularly step S505 (see FIG. 5) subsequent to the power-on of the mobile phone 100 and connection of a UMI card 8 thereto.

If the central control unit 3 finds the answer YES (an IMSI is stored temporarily) at step S604, it checks whether a folder connected (associated) with the temporarily stored IMSI (that is, an "IMSI specific folder" uniquely connected with the IMSI) is present or not (step S605).

When it is determined at step S605 that the sought "IMSI specific folder" is present, the central control unit 3 executes the cryptography software program 13 at step S606, and performs the same operations at steps S607 and S608 as those performed at steps S510 and S511, respectively. These operations make it possible for the user data connected with the temporarily stored IMSI to be decrypted. The central control unit 3 delivers the decrypted user data to the temporary memory 12 to render them readily accessible (step S609).

At step S604 or S605, the central control unit 3 determines the answer NO when it encounters either of the two situations (1) and (2) described above with respect to the operation performed at step S508 or S509. When encountering either of the two situations, the central control unit 3 completes a session of operations without reading out data (step S610).

Next, the steps which are required to allow a user to store user data will be described with reference to FIG. 7.

Contents are accumulated in the mobile phone 100 when a user adds new phone numbers to a list of phone numbers, receives/dispatches new mails, and downloads new data via networks and the like. Newly obtained data are registered in the temporary memory 11. According to this embodiment, the user can store the newly obtained data in the non-volatile memory area.

When the central control unit 3 detects a request from a user for storing data permanently (step S701), it checks whether the request is for storing the data in the "shared folder" as sharable data, or in an "IMSI specific folder" uniquely connected with the user after encryption of the data (step S702).

When the central control unit 3 finds at step S702 that the request is for storing the data in the shared folder as sharable data, it stores the data in the "shared folder" as common data without encrypting them (step S703).

On the contrary, when the central control unit 3 finds at step S702 that the request is for storing data in an "IMSI specific folder" uniquely connected with the user, it checks (step S704) whether or not there is a temporarily stored IMSI that should be present, if the central control unit 3 has properly performed necessary steps, particularly step S505 (see FIG. 5) subsequent to the power-on of the mobile phone 100 and connection of a UMI card 8 thereto.

If the central control unit 3 finds the answer NO at step S704, it means that no "IMSI specific folder" uniquely connected with the user exists in the mobile phone 100, or no UIM card 8 is connected to the mobile phone 100. In these situations, the central control unit 3 completes a session of operations (step S711).

On the contrary, when the answer obtained at step S704 is found to be YES, it means that a temporarily stored IMSI is present. Then, the central control unit 3 checks whether a folder connected with the temporarily stored IMSI (that is, an "IMSI specific folder" uniquely associated with the IMSI) is present or not (step S705).

When it is determined at step S705 that the sought "IMSI specific folder" is present, the central control unit 3 executes the cryptography software program 13 at step S706, and generates a cryptographic key on the basis of the IMSI temporarily stored, and encrypts, using the key, the user data which were requested to be stored at step S701 (step S707). The central control unit 3 stores the user data encrypted at step S707 in the "IMSI specific folder" present in the non-volatile memory 11 which is uniquely connected with the IMSI (step S708).

On the contrary, if it is determined at step S705 that no corresponding "IMSI specific folder" is present, there should be a temporarily stored IMSI, as long as YES was obtained at step S704. In this case, the central control unit 3 checks whether a new "IMSI specific folder" should be prepared in connection with the temporarily stored IMSI (step S709).

Namely, at step S709, the central control unit 3 informs the user of the absence of an "IMSI specific folder" connected with the IMSI, and prompts the user to determine whether or not a new "IMSI specific folder" should be prepared in connection with the IMSI of the user.

When the central control unit 3 obtains an answer YES at step S709, it prepares a new "IMSI specific folder" in connection with the IMSI. At this step, the "IMSI specific folder" newly prepared in connection with the IMSI in question is stored in the non-volatile memory 11 of the mobile phone 100 together with the connection data, and remains there as long as it is not deleted.

Then, the central control unit 3 proceeds to step S705, and executes the above-described operations at steps S706 and S707, so that user data, after being encrypted, are stored in the newly prepared "IMSI specific folder." [Advantages of the Embodiment]

The aforementioned embodiment of the present invention presupposes a mobile terminal (mobile phone 100) in which it is possible to carry subscriber information (IMSI) stored in a memory medium such as a UIM card 8 (IC card), independently of a phone body. According to the embodiment, such a mobile terminal can store user data (personal contents) in its internal memory in such a manner as to allow the user data, after being encrypted, to be stored in a folder (IMSI specific folder) which is uniquely connected with the ID information (IMSI) of a UIM card. The user data, after being encrypted, stored in an IMSI specific folder are not accessible, unless a UIM card carrying ID information uniquely connected (associated) with the IMSI specific folder is connected to the mobile phone.

According to the embodiment, even if a mobile terminal is shared by plural users like a so-called 3G mobile phone, it is possible to prevent the personal data of a user from being accessed or changed by other users.

According to a mobile terminal to which the embodiment is applied, even if the mobile terminal is turned on while no UIM card is connected thereto, user data stored in its internal memory remain encrypted, and thus the current user can not gain access to the user data.

Namely, according to the embodiment, even if a mobile terminal shared by plural users identifies individual users based on the ID information recorded on their respective memory media which can be detachably attached to the terminal, security management of the data of individual users is so reliably achieved that the privacy of user data is safely protected.

The aforementioned advantage of the invention is ensured for every user sharing a mobile phone 100, as long as the user has own UIM card 8 rightly applicable to the mobile phone. Namely, the embodiment is quite in contrast with the above conventional technique where a user, to ensure the same advantage, must have a second memory medium, in addition to an IC card carrying subscriber information, which is connectable to a mobile phone. Thus, the embodiment improves the convenience of users sharing a mobile phone far better than the corresponding conventional technique.

The aforementioned advantage of the embodiment is also ensured in the following modifications of the embodiment.

### <First modification of the embodiment>

According to the above embodiment, key information (cryptographic key) used for encrypting and decrypting user data is generated on the basis of the ID information of the user (that is, his IMSI). Furthermore, a folder specifically directed to a user is prepared in connection with his or her IMSI. In contrast, according to this modification, IMSI is substituted for a serial number uniquely attached to a UIM card which is an IC card.

### <Second modification of the embodiment>

According to the above embodiment, encrypted user data are dynamically managed in accordance with file management information (file management table). That is, user data are distributed to appropriate data files having a varied size according to file management information. In contrast, according to this modification, fixed memory areas are provided in the non-volatile memory 11, and individual encrypted user data are distributed to the fixed memory areas as shown in FIG. 3A to be statically managed there. However, in a mobile phone 100 shared by plural users, assignment of a fixed memory area to each user may be wasteful.

In view of this, according to this modification, a tag is attached to a header portion of each fixed memory area. When it is required to decrypt personal contents stored in a fixed memory area in an encrypted form, the system seeks a tag corresponding with ID information read from a UIM card 8 connected to the system, and locates the desired fixed memory area specifically directed to the user identified by the ID information.

### <Third modification of the embodiment>

According to the above embodiment, if the system finds that there is no "IMSI specific folder" in the non-volatile memory 11 connected with an IMSI assigned to a user, the system prompts the user at step S709 to determine whether a new "IMSI specific folder" should be prepared or not. In this modification, however, operation performed at step S709 is omitted, that is, if the system finds at step S705 that there is no "IMSI specific folder" connected with an IMSI assigned to a user, the system automatically prepares a new "IMSI specific folder" associated with the IMSI of the user.

### <Fourth modification of the embodiment>

According to this modification, if the system finds that there is an "IMSI specific folder" in the non-volatile memory 11 connected with an IMSI read from a UIM card 8 currently connected, the system may prepare a subfolder (subordinate memory area) specifically connected with the foregoing IMSI specific folder in response to a request from the user. This further improves the convenience of users.

### <Fifth modification of the embodiment>

According to this modification, personal contents of'a user rendered accessible (i.e., decrypted user data) may be transferred or copied in a "shared folder" in response to a request from the user. In a more preferred modification, contents (common data) in a "shared folder" may be transferred or copied in an "IMSI specific folder" specifically connected with a user in response to a request from the user.

With regard to the above mobile phone 100 in which data are transferred or copied from a specific folder to a shared folder or vice versa, it is presupposed that UIM cards 8 can be connected to the phone, and user data of a user become accessible by gaining access to an "IMSI specific folder" containing the user data stored in the non-volatile memory 11 of the phone via a USI card carrying the IMSI specifically connected with that specific folder. According to this modification, it is possible to improve the utility of the mobile phone by enabling not only the sharing of the phone among plural users but also the exchange of data between specific folders and the shared folder.

The above embodiment and its modifications have been described on the premise that they are applied to mobile phones. However, the mobile terminal to which the invention can be applied is not limited to mobile phones. Specifically, the present invention can be applied to PDAs (personal digital assistances) to which a memory medium such as an IC card can be detachably attached.

The present invention described above by means of an embodiment applied to a mobile phone 100 can be achieved by providing a computer program capable of supporting the operations performed at the steps shown in the above figures to the mobile phone, and allowing a CPU in the phone to execute the program. The computer program provided to the mobile phone may be stored in a memory device such as a readable/writable memory (e.g., non-volatile memory 11) in the phone.

Providing a computer program to a mobile phone can be achieved by installing the program into the phone by way of an IC card (or memory card) which works on the physically same standard with that of the UIM card 8, or by downloading the program from an external source via a network such as Internet. In this case, the'present invention takes the form of the code sequences of such a computer program, or a memory medium containing the program.

An embodiment of the present invention may be summarized as providing a mobile phone 100 comprising, as separate elements, a body and a UIM card 8 carrying subscriber information (IMSI) with the UIM card 8 being detachably attached to the body, in which, if a UIM card 8 is connected to the mobile phone 100 and IMSI is read from the card, user data (personal contents) fed to the mobile phone 100 are stored, after being encrypted, in a folder (IMSI specific folder) specifically associated with the IMSI recorded in the UIM card 8.

## Claims

1. A mobile terminal (100) capable of identifying an authorized user, when a user connects a detachable memory medium (8) to the mobile terminal, based on identification (ID) information stored in the memory medium, comprising :
memory area creating means (3) for creating a memory area, which is unique to each authorized user, in association with the ID information of the user;
**characterized by** further comprising encrypting means (3, 13) for reading out ID information from the memory medium connected to the mobile terminal, and encrypting personal contents fed to the mobile terminal on the basis of the ID information;
storing means (3) for storing the encrypted personal contents in a specific memory area associated with the ID information; and
decrypting means (3, 13) for reading out ID. information from the memory medium connected to the mobile terminal; and decrypting, based on the ID information, the personal contents encrypted and stored in the specific memory area associated with the ID information, thereby rendering the personal contents accessible to the user.

2. The mobile terminal according to Claim 1,
**characterized in that:**
said memory area creating means automatically creates, in response to the memory medium being connected to the mobile terminal, the specific memory area in association with the ID information stored in the memory medium.

3. The mobile terminal according to Claim 2
**characterized in that:**
said memory area creating means includes means for, when the memory medium is connected to the mobile terminal, providing a subordinate memory area associated with the specific memory area in accordance with the user's operation.

4. The mobile terminal according to any one of Claims 1 to 3, **characterized by** further comprising:
information sharing means which allows the users at least either to write contents into a common memory area, which is shared by a plurality of authorized users, or to gain access to contents stored in the common memory area.

5. The mobile terminal according to Claim 4, **characterized by** further comprising:
operation means for, when the memory medium is connected by the user to the mobile terminal and the personal contents is accessible by the user, at least either coping or transferring the personal contents to the common memory area in accordance with the user's operation.

6. The mobile terminal according to Claim 4,
**characterized by** further comprising:
operation means for, when the memory medium is connected by the user to the mobile terminal and the personal contents is accessible by the user, at least either coping or transferring information stored at the common memory area to the specific memory area associated with the ID information in accordance with the user's operation.

7. The mobile terminal according to any one of Claims 1 to 6, **characterized in that**:
said encrypting means generates a cryptographic key based on ID information read out from the memory medium connected to the mobile terminal, and encrypts personal contents using the cryptographic key.

8. The mobile-terminal according to any one of Claims 1 to 7, **characterized in that**:
said decrypting means generates a cryptographic key on the basis of ID information read out from the memory medium connected to the mobile terminal, and decrypts the encrypted personal contents stored in the specific memory area associated with the ID information by using the cryptographic key.

9. The mobile terminal according to any one of Claims 1 to 8, **characterized in that**:
the ID information is a subscriber information used for identifying a subscriber who is authorized to receive service to be provided via the mobile terminal, or a serial number uniquely assigned to the mobile, terminal.

10. The mobile terminal according to any one of Claims 1 to 9, **characterized in that**:
said storing means and decrypting means dynamically manage encrypted personal contents as data files having a varied size in accordance with file management information which makes it possible to properly manage the association of ID information of individual authorized users with their specific memory areas.

11. The mobile terminal according to any one of Claims 1 to 9, **characterized in that**:
the mobile terminal is shared by a plurality of users and comprises a fixed specific memory area uniquely assigned to each of the user;
said storing means, when the encrypted personal contents of a user is stored in the fixed memory area specifically assigned to the user, attaches a tag on a header portion of the fixed memory area; and
said decrypting means, when it is required to decrypt the encrypted personal data, determines the fixed memory area specifically assigned to the user by seeking the tag based on the ID information read from the memory medium currently connected to the mobile terminal.

12. The mobile terminal according to any one of Claims 1 to 11, **characterized in that**:
the memory medium is an IC card based on a common standard.

13. A method for managing information in a mobile terminal comprising a body and a memory medium with the memory medium carrying identification (ID) information being attached to or detached from the body, **characterized by** comprising:
reading ID information from a memory medium connected to.the mobile terminal;
encrypting personal contents fed to the mobile terminal on the basis of the ID information, and storing the encrypted personal contents in a specific memory area associated with the ID information;
reading out ID information from the memory medium when the memory medium is connected by a user to the mobile terminal; and
decrypting, when the encrypted personal contents is stored in a specific memory area associated with the ID information, the encrypted personal contents based on the ID information, thereby rendering the personal contents accessible to the user.

14. The information management method according to Claim 13, **characterized by** further comprising:
reading, in response to the memory medium being connected to the mobile terminal, the ID information from the memory medium; and
automatically creating the specific memory area in association with the ID information.

15. The information management method according to Claim 13 or 14, **characterized in that**:
in said encrypting, a cryptographic key is generated on the basis of the ID information read out from a memory medium connected to the mobile terminal, and the personal contents fed to the mobile terminal is encrypted by using the cryptographic key.

16. The information management method according to Claim 13 or 14, **characterized in that**:
in said decrypting, a cryptographic key is generated on the basis of the ID information read out from a memory medium connected to the mobile terminal, and the encrypted personal contents stored in the specific memory area associated with the ID information is decrypted by using the cryptographic key.

17. The information management method according to any one of Claims 13 to 16, **characterized in that**:
the ID information is a subscriber information used for identifying a subscriber who is authorized to receive service to be provided via the mobile terminal, or a serial number uniquely assigned to the mobile terminal.

18. A computer program for controlling an operation of a mobile terminal capable of identifying, when a detachable memory medium is connected to the motile terminal, an authorized user based on ID information stored in the memory medium, implementing the computer program in the mobile terminal, the mobile terminal realizes:
a memory area creating function of creating a memory area, which is unique to each authorized user, in association with the ID information of the user;
**characterized by** further realizing an encrypting function of reading out ID information from the memory medium connected to the mobile terminal, and encrypting personal contents fed to the mobile terminal on the basis of the ID information;
a storing function of storing the encrypted personal contents in a specific memory area associated with the ID information; and
a decrypting function of reading out ID information from the memory medium connected to the mobile terminal, and decrypting, based on the ID information, the personal contents encrypted and stored in the specific memory area associated with the ID information, thereby rendering the personal contents accessible to the user.

## Patentansprüche

1. Mobiles Endgerät (100), das einen autorisierten Anwender, wenn ein Anwender ein loslösbares Speichermedium (8) mit dem mobilen Endgerät verbindet, basierend auf Identifikations-(ID-)Information, die im Speichermedium gespeichert ist, identifizieren kann, umfassend:
eine Speicherbereichs-Erzeugungseinrichtung (3) zum Erzeugen eines Speicherbereichs, der für jeden autorisierten Anwender eindeutig ist, zugehörig zu der ID-Information des Anwenders;
**dadurch gekennzeichnet, dass** es weiterhin Folgendes aufweist:
eine Verschlüsselungseinrichtung (3, 13) zum Auslesen von ID-Information aus dem Speichermedium, das mit dem mobilen Endgerät verbunden ist, und zum Verschlüsseln persönlicher Inhalte, die zu dem mobilen Endgerät zugeführt sind, auf der Basis der ID-Information;
eine Speichereinrichtung (3) zum Speichern der verschlüsselten persönlichen Inhalte in einem spezifischen Speicherbereich, der zu der ID-Information gehört; und
eine Entschlüsselungseinrichtung (3, 13) zum Auslesen von ID-Information aus dem Speichermedium, das mit dem mobilen Endgerät verbunden ist, und zum Entschlüsseln der persönlichen Inhalte, die verschlüsselt und in dem spezifischen Speicherbereich, der zu der ID-Information gehört, gespeichert sind, basierend auf der ID-Information, um **dadurch** die persönlichen Inhalte für den Anwender zugänglich zu machen.

2. Mobiles Endgerät nach Anspruch 1, **dadurch gekennzeichnet, dass**:
die Speicherbereichs-Erzeugungseinrichtung in Reaktion darauf, dass das Speichermedium mit dem mobilen Endgerät verbunden wird, automatisch den spezifischen Speicherbereich zugehörig zu der in dem Speichermedium gespeicherten ID-Information erzeugt.

3. Mobiles Endgerät nach Anspruch 2, **dadurch gekennzeichnet, dass**:
die Speicherbereichs-Erzeugungseinrichtung eine Einrichtung enthält, um dann, wenn das Speichermedium mit dem mobilen Endgerät verbunden ist, einen untergeordneten Speicherbereich, der zu dem spezifischen Speicherbereich gehört, gemäß der Anwenderbedienung zur Verfügung zu stellen.

4. Mobiles Endgerät nach einem der Ansprüche 1 bis 3, **dadurch gekennzeichnet, dass** es weiterhin Folgendes aufweist:
eine Einrichtung für ein gemeinsames Nutzen von Information, welche Einrichtung zulässt, dass die Anwender wenigstens entweder Inhalte in einen gemeinsamen Speicherbereich schreiben, der durch eine Vielzahl von autorisierten Anwendern gemeinsam genutzt wird, oder einen Zugriff auf Inhalte erlangen, die in dem gemeinsamen Speicherbereich gespeichert sind.

5. Mobiles Endgerät nach Anspruch 4, **dadurch gekennzeichnet, dass** es weiterhin Folgendes aufweist:
eine Bedienungseinrichtung, um dann, wenn das Speichermedium durch den Anwender mit dem mobilen Endgerät verbunden ist und auf die persönlichen Inhalte durch den Anwender zugegriffen werden kann, die persönlichen Inhalte zu dem gemeinsamen Speicherbereich gemäß der Anwenderbedienung wenigstens entweder zu kopieren oder zu transferieren.

6. Mobiles Endgerät nach Anspruch 4, **dadurch gekennzeichnet, dass** es weiterhin Folgendes aufweist:
eine Bedienungseinrichtung, um dann, wenn das Speichermedium durch den Anwender mit dem mobilen Endgerät verbunden ist und auf die persönlichen Inhalte durch den Anwender zugegriffen werden kann, bei dem gemeinsamen Speicherbereich gespeicherte Information zu dem spezifischen Speicherbereich, der zu der ID-Information gehört, gemäß der Anwenderbedienung wenigstens entweder zu kopieren oder zu transferieren.

7. Mobiles Endgerät nach einem der Ansprüche 1 bis 6, **dadurch gekennzeichnet, dass**:
die Verschlüsselungseinrichtung einen kryptographischen Schlüssel basierend auf ID-Information, die aus dem Speichermedium ausgelesen ist, das mit dem mobilen Endgerät verbunden ist, erzeugt und persönliche Inhalte unter Verwendung des kryptographischen Schlüssels verschlüsselt.

8. Mobiles Endgerät nach einem der Ansprüche 1 bis 7, **dadurch gekennzeichnet, dass**:
die Entschlüsselungseinrichtung einen kryptographischen Schlüssel auf der Basis von ID-Information, die aus dem Speichermedium ausgelesen ist, das mit dem mobilen Endgerät verbunden ist, erzeugt und die in dem spezifischen Speicherbereich, der zu der ID-Information gehört, gespeicherten verschlüsselten persönlichen Inhalte durch Verwenden des kryptographischen Schlüssels entschlüsselt.

9. Mobiles Endgerät nach einem der Ansprüche 1 bis 8, **dadurch gekennzeichnet, dass**:
die ID-Information eine Teilnehmerinformation ist, die zum Identifizieren eines Teilnehmers verwendet wird, der dazu autorisiert ist, einen über das mobile Endgerät zu liefernden Dienst oder eine zu dem mobilen Endgerät eindeutig zugeordnete serielle Nummer zu empfangen.

10. Mobiles Endgerät nach einem der Ansprüche 1 bis 9, **dadurch gekennzeichnet, dass**:
die Speichereinrichtung und die Entschlüsselungseinrichtung verschlüsselte persönliche Inhalte als Datendateien mit einer variierten Größe gemäß Dateimanagementinformation dynamisch managen, die es möglich macht, die Verbindung bzw. Zugehörigkeit von ID-Information von einzelnen autorisierten Anwendern mit bzw. zu ihren spezifischen Speicherbereichen geeignet zu managen.

11. Mobiles Endgerät nach einem der Ansprüche 1 bis 9, **dadurch gekennzeichnet, dass**:
das mobile Endgerät durch eine Vielzahl von Anwendern gemeinsam genutzt wird und einen festen spezifischen Speicherbereich aufweist, der zu jedem der Anwender eindeutig zugeordnet ist;
die Speichereinrichtung dann, wenn die verschlüsselten persönlichen Inhalte eines Anwenders in dem festen Speicherbereich gespeichert sind, der dem Anwender spezifisch zugeordnet ist, ein Tag bzw. eine Kennung an einen Anfangsbereich des festen Speicherbereichs anbringt; und
die Entschlüsselungseinrichtung dann, wenn es erforderlich ist, die verschlüsselten persönlichen Daten zu entschlüsseln, den festen Speicherbereich, der dem Anwender spezifisch zugeordnet ist, durch ein Suchen des Tags basierend auf der ID-Information bestimmt, die aus dem Speichermedium ausgelesen ist, das gegenwärtig mit dem mobilen Endgerät verbunden ist.

12. Mobiles Endgerät nach einem der Ansprüche 1 bis 11, **dadurch gekennzeichnet, dass**:
das Speichermedium eine IC-Karte ist, die auf einem allgemeinen Standard basiert.

13. Verfahren zum Managen von Information in einem mobilen Endgerät mit einem Körper und einem Speichermedium, wobei das Speichermedium Identifikations-(ID-)Information trägt, welches Speichermedium an dem Körper angebracht oder von diesem losgelöst ist, **dadurch gekennzeichnet, dass** es Folgendes aufweist:
Lesen von ID-Information aus einem Speichermedium, das mit dem mobilen Endgerät verbunden ist;
Verschlüsseln persönlicher Inhalte, die zu dem mobilen Endgerät zugeführt sind, auf der Basis der ID-Information und Speichern der verschlüsselten persönlichen Inhalte in einem spezifischen Speicherbereich, der zu der ID-Information gehört;
Auslesen von ID-Information aus dem Speichermedium, wenn das Speichermedium durch einen Anwender mit dem mobilen Endgerät verbunden wird; und
wenn die verschlüsselten persönlichen Inhalte in einem spezifischen Speicherbereich gespeichert sind, der zu der ID-Information gehört, Entschlüsseln der verschlüsselten persönlichen Inhalte basierend auf der ID-Information, um **dadurch** die persönlichen Inhalte für den Anwender zugänglich zu machen.

14. Informationsmanagementverfahren nach Anspruch 13, **dadurch gekennzeichnet, dass** es weiterhin Folgendes aufweist:
in Reaktion darauf, dass das Speichermedium mit dem mobilen Endgerät verbunden wird, Lesen der ID-Information aus dem Speichermedium; und
automatisches Erzeugen des spezifischen Speicherbereichs zugehörig zu der ID-Information.

15. Informationsmanagementverfahren nach Anspruch 13 oder 14, **dadurch gekennzeichnet, dass**:
beim Verschlüsseln ein kryptographischer Schlüssel auf der Basis der ID-Information erzeugt wird, die aus einem Speichermedium ausgelesen ist, das mit dem mobilen Endgerät verbunden ist, und die zu dem mobilen Endgerät geführten persönlichen Inhalte durch Verwenden des kryptographischen Schlüssels verschlüsselt werden.

16. Informationsmanagementverfahren nach Anspruch 13 oder 14, **dadurch gekennzeichnet, dass**:
beim Entschlüsseln ein kryptographischer Schlüssel auf der Basis der ID-Information erzeugt wird, die aus einem Speichermedium ausgelesen ist, das mit dem mobilen Endgerät verbunden ist, und die in dem spezifischen Speicherbereich, der zu der ID-Information gehört, gespeicherten verschlüsselten persönlichen Inhalte durch Verwenden des kryptographischen Schlüssels entschlüsselt werden.

17. Informationsmanagementverfahren nach einem der Ansprüche 13 bis 16, **dadurch gekennzeichnet, dass**:
die ID-Information eine Teilnehmerinformation ist, die zum Identifizieren eines Teilnehmers verwendet wird, der dazu autorisiert ist, einen über das mobile Endgerät zu liefernden Dienst oder eine serielle Nummer, die dem mobilen Endgerät eindeutig zugeordnet ist, zu empfangen.

18. Computerprogramm zum Steuern eines Betriebs eines mobilen Endgeräts, welches Computerprogramm dann, wenn ein loslösbares Medium mit dem mobilen Endgerät verbunden ist, einen autorisierten Anwender basierend auf in dem Speichermedium gespeicherter ID-Information identifizieren kann, zum Implementieren des Computerprogramms in dem mobilen Endgerät, wobei das mobile Endgerät Folgendes realisiert:
eine Speicherbereichs-Erzeugungsfunktion zum Erzeugen eines Speicherbereichs, der für jeden autorisierten Anwender eindeutig ist, zugehörig zu der ID-Information des Anwenders;
**dadurch gekennzeichnet, dass** es weiterhin Folgendes realisiert:
eine Verschlüsselungsfunktion zum Auslesen von ID-Information aus dem Speichermedium, das mit dem mobilen Endgerät verbunden ist, und zum Verschlüsseln persönlicher Inhalte, die zu dem mobilen Endgerät zugeführt sind, auf der Basis der ID-Information;
eine Speicherfunktion zum Speichern der verschlüsselten persönlichen Inhalte in einem spezifischen Speicherbereich, der zu der ID-Information gehört; und
eine Entschlüsselungsfunktion zum Auslesen von ID-Information aus dem Speichermedium, das mit dem mobilen Endgerät verbunden ist, und zum Entschlüsseln der persönlichen Inhalte, die verschlüsselt und in dem spezifischen Speicherbereich, der zu der ID-Information gehört, gespeichert sind, basierend auf der ID-Information, um **dadurch** die persönlichen Inhalte für den Anwender zugänglich zu machen.

## Revendications

1. Terminal mobile (100) capable d'identifier un utilisateur autorisé, lorsqu'un utilisateur connecte un support de mémoire amovible (8) au terminal mobile, en fonction d'informations d'identification (ID) stockées dans le support de mémoire, comprenant :
des moyens de création de zone de mémoire (3) destinés à créer une zone de mémoire, qui est unique pour chaque utilisateur autorisé, en association avec les informations ID de l'utilisateur ;
**caractérisé en ce qu'**il comprend en outre des moyens de chiffrement (3, 13) destinés à lire des informations ID à partir du support de mémoire connecté au terminal mobile, et à chiffrer le contenu personnel amené dans le terminal mobile en fonction des informations ID ;
des moyens de stockage (3) destinés à stocker le contenu personnel chiffré dans une zone de mémoire spécifique associée aux informations ID ; et
des moyens de déchiffrement (3, 13) destinés à lire les informations ID à partir du support mémoire connecté au terminal mobile et à déchiffrer, en fonction des informations ID, le contenu personnel chiffré et stocké dans la zone de mémoire spécifique associée aux informations ID, rendant de ce fait le contenu personnel accessible à l'utilisateur.

2. Terminal mobile selon la revendication 1, **caractérisé en ce que** :
lesdits moyens de création de zone de mémoire créent automatiquement, en réponse au support de mémoire qui est connecté au terminal mobile, la zone de mémoire spécifique en association avec les informations ID stockées dans le support de mémoire.

3. Terminal mobile selon la revendication 2, **caractérisé en ce que** :
lesdits moyens de création de zone de mémoire comprennent des moyens destinés, lorsque le support de mémoire est connecté au terminal mobile, à fournir une zone de mémoire subordonnée associée à la zone de mémoire spécifique selon l'opération de l'utilisateur.

4. Terminal mobile selon une quelconque des revendications 1 à 3, **caractérisé en ce qu'**il comprend en outre :
des moyens de partage d'informations qui permettent aux utilisateurs au moins d'écrire du contenu dans une zone de mémoire commune, qui est partagée par une pluralité d'utilisateurs autorisés, ou d'obtenir l'accès au contenu stocké dans la zone de mémoire commune.

5. Terminal mobile selon la revendication 4, **caractérisé en ce qu'**il comprend en outre :
des moyens d'opération destinés, lorsque le support de mémoire est connecté par l'utilisateur au terminal mobile et que le contenu personnel est accessible pour l'utilisateur, au moins à copier ou transférer le contenu personnel vers la zone de mémoire commune selon l'opération de l'utilisateur.

6. Terminal mobile selon la revendication 4, **caractérisé en ce qu'**il comprend en outre :
des moyens d'opération destinés, lorsque le support de mémoire est connecté par l'utilisateur au terminal mobile et que le contenu personnel est accessible pour l'utilisateur, au moins à copier ou transférer les informations stockées au niveau de la zone de mémoire commune vers la zone de mémoire spécifique associée aux informations ID selon l'opération de l'utilisateur.

7. Terminal mobile selon l'une quelconque des revendications 1 à 6, **caractérisé en ce que** :
lesdits moyens de chiffrement génèrent une clé cryptographique en fonction des informations ID lues à partir du support de mémoire connecté au terminal mobile, et chiffre le contenu personnel à l'aide de la clé cryptographique.

8. Terminal mobile selon l'une quelconque des revendications 1 à 7, **caractérisé en ce que** :
lesdits moyens de déchiffrement génèrent une clé cryptographique en fonction des informations ID lues à partir du support de mémoire connecté au terminal mobile, et déchiffre le contenu personnel chiffré stocké dans la zone de mémoire spécifique associée aux informations ID en utilisant la clé cryptographique.

9. Terminal mobile selon l'une quelconque des revendications 1 à 8, **caractérisé en ce que** :
les informations ID sont des informations d'abonné utilisées pour identifier un abonné qui est autorisé à recevoir un service devant être fourni par le biais du terminal mobile, ou un numéro de série attribué de façon unique au terminal mobile.

10. Terminal mobile selon l'une quelconque des revendications 1 à 9, **caractérisé en ce que** :
lesdits moyens de stockage et moyens de déchiffrement gèrent de façon dynamique le contenu personnel chiffré comme des fichiers de données ayant une taille variable en fonction des informations de gestion de fichier qui rendent possible de gérer correctement l'association d'informations ID d'utilisateurs individuels autorisés à leurs zones de mémoire spécifiques.

11. Terminal mobile selon l'une quelconque des revendications 1 à 9, **caractérisé en ce que** :
le terminal mobile est partagé par une pluralité d'utilisateurs et comprend une zone de mémoire spécifique fixe affectée de façon unique à chacun des utilisateurs ;
lesdits moyens de stockage, lorsque le contenu personnel chiffré d'un utilisateur est stocké dans la zone de mémoire fixe affectée spécifiquement à l'utilisateur, joignent une balise sur une partie d'entête de la zone de mémoire fixe ; et
lesdits moyens de déchiffrement, lorsqu'ils doivent déchiffrer les données personnelles chiffrées, déterminent la zone de mémoire fixe affectée spécifiquement à l'utilisateur en recherchant la balise en fonction des informations ID lues à partir du support de mémoire actuellement connecté au terminal mobile.

12. Terminal mobile selon l'une quelconque des revendications 1 à 11, **caractérisé en ce que** :
le support de mémoire est une carte de circuits intégrés basée sur un standard courant.

13. Procédé de gestion d'informations dans un terminal mobile comprenant un corps et un support de mémoire avec le support de mémoire portant des informations d'identification (ID) attaché à ou détaché du corps, **caractérisé en ce qu'**il comprend les étapes consistant à :
lire les informations ID à partir d'un support de mémoire connecté au terminal mobile ;
chiffrer un contenu personnel amené vers le terminal mobile en fonction des informations ID, et stocker le contenu personnel chiffré dans une zone de mémoire spécifique associée aux informations ID ;
lire les informations ID à partir du support de mémoire lorsque le support de mémoire est connecté par un utilisateur au terminal mobile ; et
déchiffrer, lorsque le contenu personnel chiffré est stocké dans une zone de mémoire spécifique associée aux informations ID, le contenu personnel chiffré en fonction des informations ID, rendant de ce fait le contenu personnel accessible à l'utilisateur.

14. Procédé de gestion d'informations selon la revendication 13, **caractérisé en ce qu'**il comprend en outre les étapes consistant à :
lire, en réponse à la connexion du support de mémoire au terminal mobile, les informations ID provenant du support de mémoire ; et
créer automatiquement la zone de mémoire spécifique en association avec les informations ID.

15. Procédé de gestion d'informations selon la revendication 13 ou 14, **caractérisé en ce que** :
dans ladite étape de chiffrement, une clé cryptographique est générée en fonction des informations ID lues à partir d'un support de mémoire connecté au terminal mobile, et le contenu personnel amené vers le terminal mobile est chiffré à l'aide de la clé cryptographique.

16. Procédé de gestion d'informations selon la revendication 13 ou 14, **caractérisé en ce que** :
dans ladite étape de déchiffrement, une clé cryptographique est générée en fonction des informations ID lues à partir d'un support de mémoire connecté au terminal mobile, et le contenu personnel chiffré stocké dans la zone de mémoire spécifique associée aux informations ID est déchiffré à l'aide de la clé cryptographique.

17. Procédé de gestion d'informations selon l'une quelconque des revendications 13 à 16, **caractérisé en ce que** :
les informations ID sont des informations d'abonné utilisées pour identifier un abonné qui est autorisé à recevoir un service devant être fourni par l'intermédiaire du terminal mobile, ou un numéro de série attribué de façon unique au terminal mobile.

18. Programme informatique destiné à commander une opération d'un terminal mobile capable d'identifier, lorsqu'un support de mémoire amovible est connecté au terminal mobile, un utilisateur autorisé en fonction d'informations ID stockées dans le support de mémoire, en mettant en oeuvre le programme information dans le terminal mobile, le terminal mobile réalise :
une fonction de création de zone de mémoire consistant à créer une zone de mémoire, qui est unique pour chaque utilisateur autorisé, en association avec les informations ID de l'utilisateur ;
**caractérisé en ce qu'**il réalise en outre une fonction de chiffrement consistant à lire les informations ID provenant du support de mémoire connecté au terminal mobile, et à chiffrer le contenu personnel amené vers le terminal mobile en fonction des informations ID ;
une fonction de stockage consistant à stocker le contenu personnel chiffré dans une zone de mémoire spécifique associée aux informations ID ; et
une fonction de déchiffrement consistant à lire les informations ID provenant du support de mémoire connecté au terminal mobile, et à déchiffrer, en fonction des informations. ID, le contenu personnel chiffré et stocké dans la zone de mémoire spécifique associée aux informations ID, rendant de ce fait le contenu personnel accessible à l'utilisateur.
